(19)

Europäisches
Patentamt
European
Patent Office
Office européen
des brevets

(11) **EP 4 102 420 A1**

(12) **EUROPEAN PATENT APPLICATION**
published in accordance with Art. 153(4) EPC

(43) Date of publication:
**14.12.2022 Bulletin 2022/50**

(21) Application number: **21751487.6**

(22) Date of filing: **04.02.2021**

(51) International Patent Classification (IPC):
*G06N 99/00* (2019.01)     *G06F 17/18* (2006.01)

(52) Cooperative Patent Classification (CPC):
**G06F 17/18; G06N 99/00**

(86) International application number:
**PCT/JP2021/004178**

(87) International publication number:
**WO 2021/157669 (12.08.2021 Gazette 2021/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.02.2020 JP 2020017477**

(71) Applicants:
• **The University of Tokyo**
**Bunkyo-ku, Tokyo 113-8654 (JP)**
• **Daicel Corporation**
**Osaka 530-0011 (JP)**

(72) Inventors:
• **OKAMOTO, Hiroshi**
**Tokyo 113-8654 (JP)**

• **TAKAHASHI, Marina**
**Tokyo 113-8654 (JP)**
• **SHINOHARA, Shuji**
**Tokyo 113-8654 (JP)**
• **MITSUYOSHI, Shunji**
**Tokyo 113-8654 (JP)**
• **KOZONO, Hidetoshi**
**Tokyo 108-8230 (JP)**
• **HAITSUKA, Masahiro**
**Tokyo 108-8230 (JP)**
• **MIYOSHI, Fumihiro**
**Tokyo 108-8230 (JP)**

(74) Representative: **Grünecker Patent- und
Rechtsanwälte
PartG mbB
Leopoldstraße 4
80802 München (DE)**

(54) **REGRESSION ANALYSIS DEVICE, REGRESSION ANALYSIS METHOD, AND PROGRAM**

(57)    A regression model having a correspondence relationship with variation of an explanatory variable and variation of a target variable is constructed. A regression analysis device includes a data acquisition unit that reads out, from a storage device storing training data used as a target variable and an explanatory variable of a regression model and a constraint condition defining in advance whether the explanatory variable should be varied positively or negatively to vary the target variable in a positive direction or a negative direction, the training data and the constraint condition, and a coefficient update unit that repeatedly updates, using the training data, coefficients of the explanatory variable in the regression model to minimize a cost function including a regularization term that increases a cost in a case where the constraint condition is contravened.

FIG. 5

EP 4 102 420 A1

**Description**

FIELD

The present disclosure relates to a regression analysis device, a regression analysis method, and a program.

BACKGROUND

In the related art, when a parameter of a regression model is estimated by a least-squares method, there is a problem that the least-squares estimator cannot be obtained, for example, when the number of samples of data is small. For solving the problem, a technique for providing a constraint condition called L1 norm has been proposed (e.g., Non-Patent Literature 1). According to Least Absolute Shrinkage and Selection Operator (LASSO), which is a parameter estimation technique using the L1 norm as the constraint condition, selection of an explanatory variable appropriate for describing a target variable and determination of a coefficient are performed together.

Furthermore, as to the LASSO, various improved techniques have been proposed, such as pre-grouping or clustering of explanatory variables having high correlation.

PRIOR ART DOCUMENT

NON-PATENT DOCUMENT

Non-Patent Literature 1: Robert Tibshirani, "Regression Shrinkage and Selection via the Lasso", Journal of the Royal Statistical Society. Series B (Methodological) Vol. 58, No. 1 (1996), pp. 267-288

SUMMARY

TECHNICAL PROBLEM

In the related art, for example, in a case where control is performed to obtain a desired result, it is sometimes impossible to obtain an appropriate result even when a prediction model is used to solve an inverse problem. That is, it is not clear how to change a value of explanatory variable to bring an estimated value by the prediction model closer to a desired value. However, with a technique in which a combination of explanatory variables is changed to repeat simulation, a calculation cost is involved. Thus, the present technology is directed to constructing a regression model having a correspondence relationship with variation of an explanatory variable and variation of a target variable.

SOLUTION TO PROBLEM

A regression analysis device includes a data acquisition unit that reads out, from a storage device storing training data used as a target variable and an explanatory variable of a regression model and a constraint condition defining in advance whether the explanatory variable should be varied positively or negatively to vary the target variable in a positive direction or a negative direction, the training data and the constraint condition, and a coefficient update unit that repeatedly updates, using the training data, coefficients of the explanatory variable in the regression model to minimize a cost function including a regularization term that increases a cost in a case where the constraint condition is contravened.

According to the regularization term as described above, a coefficient that is contrary to the constraint condition is not selected, and it is possible to create a regression model that can indicate whether the explanatory variable should be varied positively or negatively to vary the target variable in a positive direction or a negative direction. That is, it is possible to construct a regression model having a correspondence relationship with variation of the explanatory variable and variation of the target variable.

Alternatively, the regularization term may increase the cost in accordance with the sum of absolute values of coefficients in an interval where the coefficients are positive or negative depending on the constraint condition. For example, in one interval where the coefficients are positive or negative, a regression model may be constructed using the L1 regularization. In addition, the regularization term may increase the cost in accordance with the sum of absolute values of coefficients in one of the interval where the coefficients are positive depending on the constraint condition and the interval where the coefficients are negative depending on the constraint condition and may make the cost infinite in the other one of the interval where the coefficients are positive depending on the constraint condition and the interval where the coefficients are negative depending on the constraint condition.

Furthermore, the coefficient update unit may make the coefficients zero in a case where coefficients do not converge to a value satisfying the constraint condition. By doing so, an explanatory variable that does not contribute to the target variable under the above-described constraint condition can be deleted from the regression model, thereby achieving sparse modeling.

Furthermore, the coefficient update unit may update the coefficients by a proximal gradient method. By doing so, it is possible to avoid passing through a nondifferentiable point of the regularization term in convergence calculation. This can shorten the time required for convergence.

Note that the details described in the Solution to Problem can be combined as possible within a scope not departing from the object and the technical concept of the present disclosure. Furthermore, the details in the Solution to Problem can be provided as a system including a device or a plurality of devices such as a computer, a method executed by a computer, or a program executed by a computer. Note that a recording medium that retains the program may be provided.

ADVANTAGEOUS EFFECTS OF INVENTION

According to the disclosed technology, it is possible to construct a regression model having a correspondence relationship with variation of an explanatory variable and variation of a target variable.

BRIEF DESCRIPTION OF DRAWINGS

FIG. 1 is a diagram showing an example of training data used to create a regression formula.
FIG. 2A is a schematic diagram for explaining a constraint imposed on a regression coefficient.
FIG. 2B is a schematic diagram for explaining a constraint imposed on the regression coefficient.
FIG. 3 is a diagram for explaining update of a parameter w.
FIG. 4 is a diagram for explaining update of a parameter $\eta$.
FIG. 5 is a block diagram illustrating an example of a configuration of a regression analysis device 1 performing regression analysis described above.
FIG. 6 is a processing flow diagram illustrating an example of regression analysis processing performed by the regression analysis device.
FIG. 7A is a diagram showing a relationship between a parameter $\alpha$ representing a strength of a constraint and a correlation coefficient r.
FIG. 7B is a diagram showing a relationship between the parameter $\alpha$ representing the strength of the constraint and the correlation coefficient r.
FIG. 8 is a diagram illustrating a relationship between the parameter $\alpha$ representing the strength of the constraint and a determination coefficient E.
FIG. 9 is a diagram showing a relationship between the number of data T used for learning and the correlation coefficient r.
FIG. 10 is a diagram showing a relationship between the number of data T used for learning and the determination coefficient E.
FIG. 11A is a schematic diagram for explaining a constraint imposed on a regression coefficient.
FIG. 11B is a schematic diagram for explaining a constraint imposed on the regression coefficient.
FIG. 12 is a diagram showing a relationship between a parameter $\beta$ and the correlation coefficient r.
FIG. 13 is a diagram showing a relationship between the parameter $\beta$ and a determination coefficient $R^2$.
FIG. 14 is a diagram showing a relationship between the parameter $\beta$ and RMSE.

DESCRIPTION OF EMBODIMENTS

Hereinafter, an embodiment of a regression analysis device will be described with reference to the drawings.

Embodiment

The regression analysis device according to the present embodiment constructs a regression formula (regression model) representing a relationship between one or more explanatory variables (independent variables) and one target variable (dependent variable). At this time, on at least any one of the explanatory variables, a constraint having a certain correspondence relationship with a positive or negative direction of variation of the explanatory variable and a positive or negative direction of variation of the target variable (referred to as a "sign constraint") is imposed to create the regression formula.

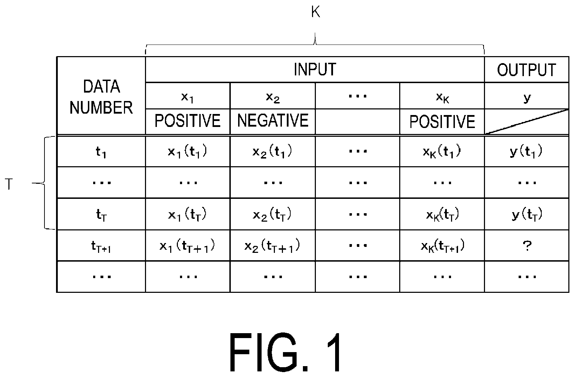

FIG. 1 is a diagram showing an example of observed values (pieces of training data) used to create the regression formula. The table of FIG. 1 includes a column of K types of inputs x ($x_1$ to $x_K$) and a column of outputs y. The inputs x correspond to the explanatory variables, and the outputs y corresponds to the target variable. In addition, T records among a plurality of records representing data points t ($t_1$ to $t_T$, ...), which are individual samples of training data, are used to create the regression formula. Furthermore, a positive or negative sign (information representing a constraint condition according to the present embodiment, and referred to as a "constraint sign") is associated with at least a part of the K types of inputs x. The constraint sign associated with each input x is information for pre-defining whether the input x is to be varied positively or negatively to vary the output y in a positive direction in the regression formula to be constructed.

The regression formula is represented by, for example, Equation (1) below. [Math. 1]

$$\mu = w_0 + \sum_{k=1}^{K} w_k x_k \qquad \cdots \ (1)$$

Note that $w_k$ is a regression coefficient and wo is a constant term. Furthermore, $w_k$ is determined in accordance with a predetermined constraint sign.

For determining the regression coefficient and the constant term, a cost function represented by Equation (2) below can be used. Selection of a coefficient $w_k$ that minimizes the cost function E(w) determines the regression formula. [Math. 2]

$$E(\mathbf{w}) = \frac{1}{2} \sum_{t=1}^{T} \left[ y(t) - \left( \sum_{k=1}^{K} w_k x_k(t) + w_0 \right) \right]^2 + \alpha R \qquad \cdots \ (2)$$

where

$$R = \sum_{k \in \Omega_+} R_+(w_k) + \sum_{k \in \Omega_-} R_-(w_k)$$

$$R_+(w) = \begin{cases} 0 & w \geq 0 \\ -w & w < 0 \end{cases}$$

$$R_-(w) = \begin{cases} +w & w \geq 0 \\ 0 & w < 0 \end{cases}$$

$\alpha R$ is a regularization term (penalty term), and a coefficient $\alpha$ thereof is a parameter representing a strength of a constraint. In the table of FIG. 1, in a case where the constraint sign of $x_k$ is positive, a value of R+(w) is taken, and in a case where the constraint sign is negative, a value of R-(w) is taken. In this manner, the regularization term $\alpha R$ according to the present embodiment imposes a sign constraint by type L1 regularization in one interval of positive or negative. That is, the regularization term increases a cost in accordance with the sum of absolute values of coefficients in one of an interval where the coefficient $w_k$ is positive depending on the constraint sign and an interval where the coefficient $w_k$ is negative depending on the constraint sign.

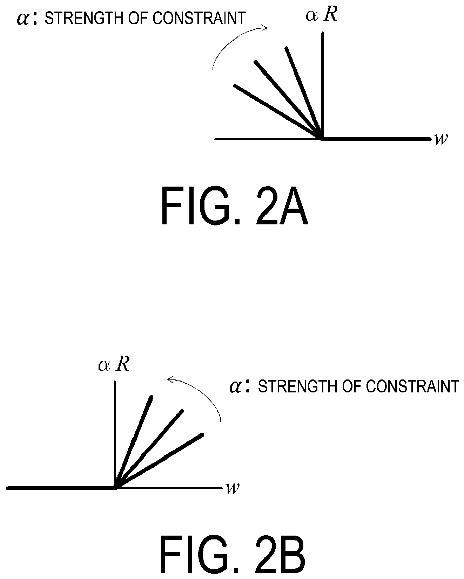

FIGS. 2A and 2B are schematic diagrams for explaining the constraint imposed on one regression coefficient w. In the graph of FIG. 2A, the vertical axis indicates R+(w), and the horizontal axis indicates w. The arrow schematically represents that the regularization term is defined to achieve that, in an interval where w is negative, the greater the value of $\alpha$ is, even greater the value of R+(w) is. In Equation (2) above, when the constraint sign associated with the input $x_k$ is positive and the coefficient $w_k$ of the input $x_k$ is zero or greater, R+(w) = 0 is satisfied, and E(w) is not increased. On the other hand, when the coefficient $w_k$ of the input $x_k$ is less than zero, $R_+(w)$ = -w is satisfied and E(w) is increased. Here, when the coefficient $w_k$ is zero or greater, as the input $x_k$ of the regression formula shown in Equation (1) increases, a prediction value $\mu$ by the regression formula also increases. That is, in a case of the constraint sign associated with $x_k$ being positive, the cost function is defined to achieve that the regularization term is decreased when the value of the prediction value $\mu$ also increases as the value of the input $x_k$ increases and that the regularization term is increased when the value of the prediction value μ decreases as the value of the input $x_k$ increases.

In the graph of FIG. 2B, the vertical axis indicates R-(w), and the horizontal axis indicates w. The arrow schematically represents that the regularization term is defined to achieve that, in an interval where w is positive, the greater the value of α is, even greater the value of R-(w) is. In Equation (2) above, when the constraint sign of the input $x_k$ is negative and the coefficient $w_k$ of the input $x_k$ is zero or greater, R-(w) = w is satisfied, and E(w) is increased. On the other hand, when the coefficient $w_k$ of the input $x_k$ is less than zero, R-(w) = 0 is satisfied and E(w) is not increased. Here, when the coefficient $w_k$ is less than zero, as the input $x_k$ of the regression formula shown in Equation (1) increases, the prediction value μ by the regression formula decreases. That is, in a case of the constraint sign associated with the input $x_k$ being negative, the cost function is defined to achieve that the regularization term is decreased when the value of the prediction value μ decreases as the value of the input $x_k$ increases and that the regularization term is increased when the value of the prediction value μ also increases as the value of the input $x_k$ increases.

According to the regularization term as described above, a constraint having a certain correspondence relationship with a positive or negative direction of variation of the explanatory variable and a positive or negative direction of variation of the target variable is imposed to perform regression analysis.

In addition, partial differentiation on the variable w of the cost function E(w) is represented by Equation (3) below. [Math. 3]

$$\frac{\partial E}{\partial w_k} = \sum_t \left[ \left( \sum_{k'=1}^K w_{k'} x_{k'}(t) + w_0 \right) - y(t) \right] x_k(t) + \alpha \frac{\partial R}{\partial w_k} \qquad \cdots (3)$$

where

$$\frac{\partial R_+(w)}{\partial w} = \begin{cases} 0 & w > 0 \\ -1 & w < 0 \end{cases}$$

$$\frac{\partial R_-(w)}{\partial w} = \begin{cases} +1 & w > 0 \\ 0 & w < 0 \end{cases}$$

The parameter w that minimizes E(w) may be updated using Equation (4) below by, for example, a gradient method. [Math. 4]

$$w_k(s+1) = w_k(s) - \Delta \frac{\partial E(\mathbf{w})}{\partial w_k}\bigg|_{w_k \to w_k(s)} \qquad \cdots (4)$$

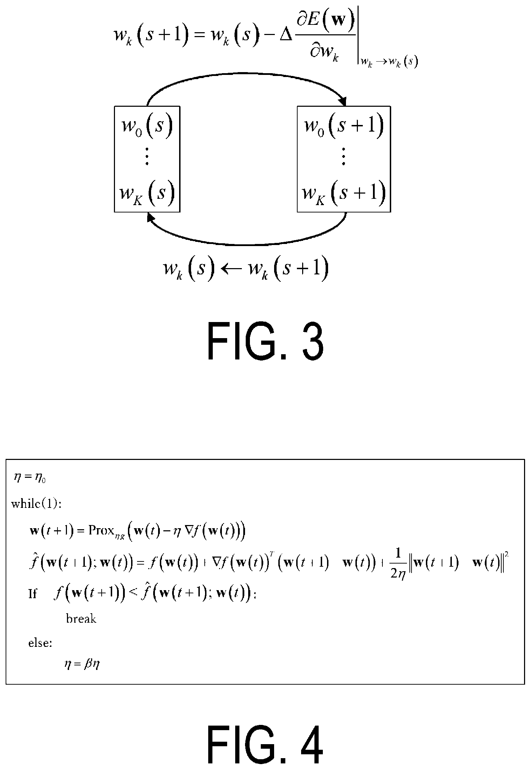

FIG. 3 is a diagram for explaining update of the parameter w. Based on a gradient for the variable w of the cost function E(w) in a step s, the variable w in the subsequent step s + 1 is updated, and such processing is repeated until w converges.

However, as shown in Equation (3), irrespective of the constraint sign associated with the input $x_k$, w = 0 is satisfied, and differentiation is impossible. For example, a value in accordance with the constraint sign may be calculated for each input $x_k$ and the sum of the calculated values may be used as the regularization term to perform regression by a steepest descent method, but the calculation becomes unstable. Thus, for example, a proximal gradient method may be used. In the proximal gradient method as well, for example, w that minimizes the above Equation (2) is obtained. When the sum of squared error of Equation (2) is denoted as f(x) and the regularization term is denoted as g(w), the update formula of w is represented by Equation (5) below. [Math. 5]

$$\mathbf{w}(t+1) = \text{prox}_{\eta g}(\tilde{\mathbf{w}}(t+1)) \qquad \cdots (5)$$

where

$$\tilde{\mathbf{w}}(t+1) = \mathbf{w}(t) - \eta \, \nabla f\left(\mathbf{w}(t)\right) \qquad (\text{... Steepest descent method without regularization term})$$

$$\mathrm{prox}_{\eta g}\left(\tilde{\mathbf{w}}(t+1)\right) \equiv \arg\min_{\mathbf{w}} \left\{ \eta g + \frac{1}{2}\left\|\mathbf{w} - \tilde{\mathbf{w}}(t+1)\right\|^2 \right\} \qquad (\text{... Proximal operator})$$

$\eta$ is a step width that determines a magnitude for updating the coefficient w in one step (one iteration). $\nabla$ f(W(t)) represents a gradient. Update is repeated until the gradient approaches zero sufficiently, and when the gradient has approached zero sufficiently, it is determined that convergence has been achieved, whereby the update is terminated.

More specifically, an update formula of w is represented by Equation (6) below. [Math. 6]

$$\tilde{w}_n(t+1) = w_n(t) - \eta \, \frac{\partial}{\partial w_n(t)} f\left(\mathbf{w}(t)\right) \qquad \cdots \ (6)$$

In a case where the constraint sign is positive, it can be calculated as in Equation (7) below. [Math. 7]

$$w_n(t+1) = \begin{cases} \tilde{w}_n(t+1) & \text{for} \quad \tilde{w}_n(t+1) > 0 \\ 0 & \text{for} \quad -\eta\alpha \le \tilde{w}_n(t+1) \le 0 \\ \tilde{w}_n(t+1) + \eta\alpha & \text{for} \quad \tilde{w}_n(t+1) < -\eta\alpha \end{cases} \qquad \cdots \ (7)$$

In a case where the constraint sign is negative, it can be calculated as in Equation (8) below. [Math. 8]

$$w_n(t+1) = \begin{cases} \tilde{w}_n(t+1) - \eta\alpha & \text{for} \quad \tilde{w}_n(t+1) > \eta\alpha \\ 0 & \text{for} \quad 0 \le \tilde{w}_n(t+1) \le \eta\alpha \\ \tilde{w}_n(t+1) & \text{for} \quad \tilde{w}_n(t+1) < 0 \end{cases} \qquad \cdots \ (8)$$

The coefficient w can be determined by processing as described above. The coefficient w converges to a value that satisfies the sign constraint and contributes to the target variable, and when there is no such a value, the coefficient w approaches zero. That is, in a case where there is no value that satisfies the sign constraint, a penalty effect by regularization is exhibited as shown in FIGS. 2A and 2B to draw back a value that is contrary to the sign constraint, resulting in convergence to zero. Thus, a part of the regression coefficient may be estimated to be zero, similarly to the so-called LASSO.

Note that the value of $\eta$ may also be updated as appropriate in each step repeated in the processing of updating the coefficient. FIG. 4 shows an example of a schematic code to search for an appropriate $\eta$. For example, the processing as shown in FIG. 4 is performed in each step. $\eta_0$ is a predetermined initial value. $\beta$ is, for example, a positive value smaller than 1 and updates $\eta$ to reduce $\eta$. $\eta$ that is the step width of updating the coefficient w is adjusted in this manner, and thus it is possible to cause the coefficient w to appropriately converge.

Device Configuration

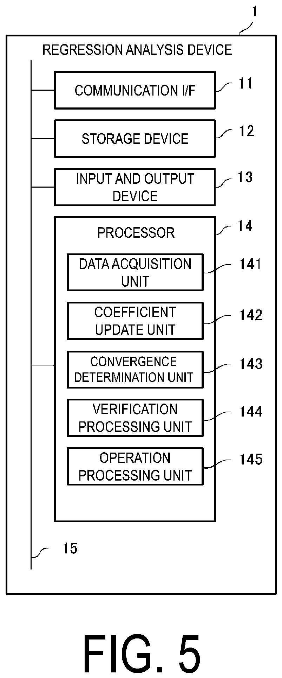

FIG. 5 is a block diagram illustrating an example of a configuration of a regression analysis device 1 that performs the regression analysis described above. The regression analysis device 1 is a typical computer and includes a communication interface (I/F) 11, a storage device 12, an input and output device 13, and a processor 14. The communication I/F 11 may be, for example, a network card or a communication module and communicates with another computer based on a predetermined protocol. The storage device 12 may be a main storage device such as a Random Access Memory (RAM) or a Read Only Memory (ROM), and an auxiliary storage device (secondary storage device) such as a Hard-Disk Drive (HDD), a Solid State Drive (SSD), or a flash memory. The main storage device temporarily stores a program read out by the processor 14 and information to be processed by the program. The auxiliary storage device stores a program executed by the processor 14, information to be processed by the program, and the like. In the present embodiment, training data and information representing a constraint condition is temporarily or permanently stored in the storage device 12. The input and output device 13 is a user interface including, for example, an input device such as a keyboard or a mouse, an output device such as a monitor, or an input and output device such as a touch panel. The processor 14 is an arithmetic processing device such as a Central Processing Unit (CPU) and executes a program to perform each processing according to the present embodiment. In an example of FIG. 1, functional blocks are illustrated in the processor 14. That is, the processor 14 executes a predetermined program to function as a data acquisition unit 141, a coefficient update unit 142, a convergence determination unit 143, a verification processing unit 144, and an operation processing unit 145.

The data acquisition unit 141 acquires the training data and the information representing the constraint condition from the storage device 12. The coefficient update unit 142 updates a coefficient of the regression formula under the above-described constraint condition. The convergence determination unit 143 determines whether the value of the updated coefficient has converged. In a case where it is determined that the value has not converged, the coefficient update unit 142 repeats update of the coefficient. In a case where it is determined that the value has converged, for example, the coefficient update unit 142 causes the storage device 12 to store the ultimately generated coefficient. The verification processing unit 144 evaluates the regression formula created based on a predetermined evaluation index. The operation processing unit 145 uses the generated regression formula and, for example, a newly acquired observed value to calculate a prediction value. Alternatively, the operation processing unit 145 may use the created regression formula and an optional value to calculate the prediction value in a case where the condition is changed. Here, the optional value may be a value that is input by a user via, for example, the communication I/F 11 or the input and output device 13. The regression formula created in the present embodiment has a certain correspondence relationship with the direction of variation of the explanatory variable and the direction of variation of the target variable, and thus, a user can easily estimate whether to increase an input value or whether to decrease the input value, for example, to bring the prediction value close to a desired value. Accordingly, for example, in a case where any control is performed based on an estimated value, the regression formula according to the present embodiment is effective.

Components as described above are connected via a bus 15.

Regression Analysis Processing

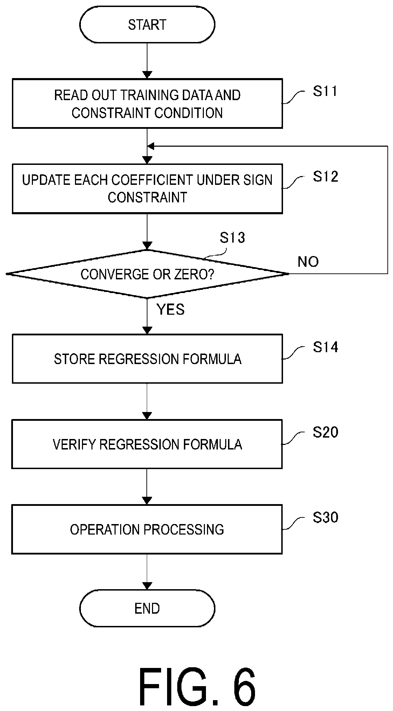

FIG. 6 is a processing flow diagram illustrating an example of regression analysis processing performed by the regression analysis device. The data acquisition unit 141 of the regression analysis device 1 reads out the training data and the information representing the constraint condition from the storage device 12 (FIG. 6: S11). In the present step, for example, the values of the input x and the output y as shown in FIG. 1 are read out as the training data. Note that the input x is treated as the explanatory variable, and the output y is treated as the target variable. In addition, in FIG. 1, a positive or negative sign registered in association with the input x is read out as the information representing the constraint condition. The regression analysis device 1 uses the sign to be read out as the constraint sign described above. Note that in the present embodiment, the regression formula as shown in Equation (1) is used.

In addition, the coefficient update unit 142 of the regression analysis device 1 updates the regression coefficient under the above-described sign constraint (FIG. 6: S12). In the present step, the coefficient update unit 142 updates the coefficient w to minimize the cost function E(w) shown in Equation (2), for example, as indicated by the upper arrow in FIG. 3. Specifically, the coefficient update unit 142 can update the coefficient w based on Equations (6) to (8).

The regularization term of the cost function E(w) according to the present embodiment is defined to increase the cost in a case where the constraint condition acquired in S11 is not satisfied. That is, the regularization term reduces the value of the cost function E(w) when the positive or negative direction of the variation of the explanatory variable and the positive or negative direction of the variation of the target variable have a predetermined correspondence relationship. In addition, in a case where the coefficient does not converge to a value that satisfies the constraint condition, the coefficient update unit 143 makes the coefficient zero.

Furthermore, the convergence determination unit 143 of the regression analysis device 1 determines whether the coefficient w has converged or has been made zero (FIG. 6: S13). In the present step, the convergence determination unit 143 determines that the coefficient w has converged in a case where a gradient of the updated coefficient w has approached zero sufficiently. Specifically, the convergence determination unit 143 determines that the coefficient w has converged when the value of the coefficient w is not changed in Equation (7) or Equation (8).

In a case where it is determined that the coefficient w has not converged and has not been also made zero (S13: NO), the step returns to S12 and the processing is repeated. On the other hand, in a case where it is determined that the coefficient w has converged or has been made zero (S13: YES), the convergence determination unit 143 stores the regression formula in the storage device 12 (FIG. 6: S14). In the present step, the convergence determination unit 143 causes the storage device 12 to store the updated coefficient w.

Alternatively, the verification processing unit 144 of the regression analysis device 1 may verify the accuracy of the created regression formula (FIG. 6: S20). In the present step, the verification processing unit 144 uses test data to verify the accuracy of the regression formula, for example, by cross-validation. Furthermore, the verification processing unit 144 can perform verification based on a predetermined evaluation index such as a correlation coefficient or a predetermined determination coefficient. As will be described below, the present step may be omitted.

Then, the operation processing unit 145 of the regression analysis device 1 uses the created regression formula to perform operation processing (FIG. 6: S30). In the present step, the operation processing unit 145 calculates a prediction value of the output y for a new input x, as a record having the data number $t_{T+1}$ shown in FIG. 1, for example. Note that the present step may be performed by a device (not illustrated) other than the regression analysis device 1, using the regression formula stored in S14.

Example

The regression formula was constructed using sensing data obtained from a production plant to evaluate the accuracy. Output values of different sensors were used as respective inputs and outputs shown in FIG. 1. Furthermore, the latest number of data T was used as a learning interval for sensing data continuously output from a sensor. Furthermore, the constraint sign was preset based on the knowledge related to the production plant.

The correlation coefficient r used as an evaluation index is obtained by Expression (9) below. [Math. 9]

$$r \doteq \frac{\sum_{t=1}^{T}\left(\mu_t - \bar{\mu}\right)\left(y_t^{(O)} - \bar{y}^{(O)}\right)}{\sqrt{\sum_{t-1}^{T}\left(\mu_t - \bar{\mu}\right)^2}\sqrt{\sum_{t-1}^{T}\left(y_t^{(O)} - \bar{y}^{(O)}\right)^2}} \quad \cdots \quad (9)$$

where $y_t^{(O)}$ is an observed value

$$\bar{\mu} = \frac{\sum_{t-1}^{T}\mu_t}{T}, \quad \bar{y}^{(O)} = \frac{\sum_{t-1}^{T}y_t^{(O)}}{T}$$

That is, the numerator of Expression (9) is covariance of the prediction value $\mu$ and the measured value y of the training data. The denominator of Expression (9) is product of the standard deviation of the prediction value $\mu$ and the standard deviation of the measured value y of the training data.

Furthermore, the determination coefficient E used as another evaluation index is obtained by Equation (10) below. [Math. 10]

$$E = \frac{\text{Standard deviation of standardized predictive distribution } (= 1)}{\text{Standard deviation of observed values scaled for standardization}} \quad \cdots \quad (10)$$

The determination coefficient E is a value representing a magnitude of distribution of prediction values with respect to distribution of observed values. In a case where the distribution of observed values coincides with the distribution of prediction values by standardization, E = 1 is satisfied. On the other hand, in a case where the distribution of prediction values is narrower than the distribution of observed values, E < 1 is satisfied. And, in a case where the distribution of prediction values is wider than the distribution of observed values, E > 1 is satisfied.

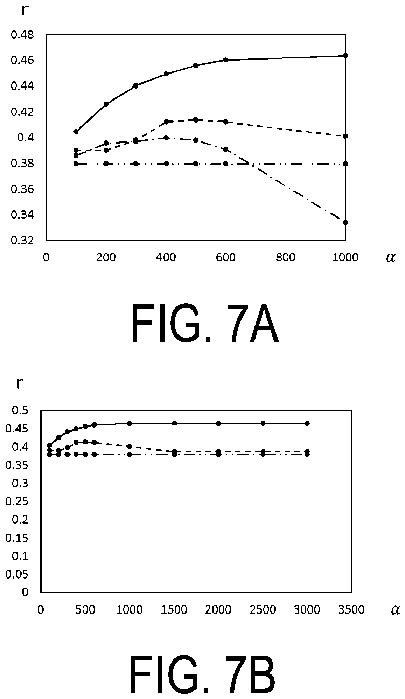

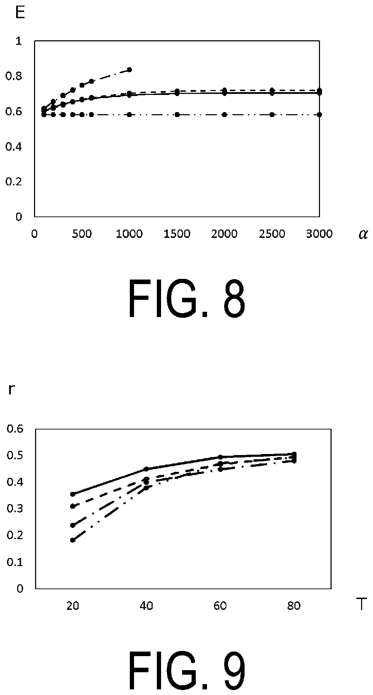

FIGS. 7A and 7B are diagrams each showing relationships between the parameter $\alpha$ representing a strength of the constraint and the correlation coefficient r for models constructed in a plurality of techniques. FIG. 8 is a diagram showing relationships between the parameter $\alpha$ representing a strength of the constraint and the determination coefficient E for models constructed in a plurality of techniques. In the line graphs in FIGS. 7A and 7B, the horizontal axis indicates the parameter $\alpha$, and the vertical axis indicates the correlation coefficient r. FIGS. 7A and 7B are different from each other in the scale of the horizontal axis. Meanwhile, in the line graph of FIG. 8, the horizontal axis indicates $\alpha$, and the vertical axis indicates the determination coefficient E. The solid line indicates a result of the technique disclosed in the embodiment, the dashed line indicates a result of a comparative example in which a part of the sign constraint of the embodiment is selected randomly to invert positive and negative sign, the dash-dot-dash line indicates a result of the L1 regularization (LASSO), and the dash-dot-dot-dash line indicates a result without regularization. Note that, in each technique, the model was constructed using the number of data T of 40. Furthermore, although the constraint sign is set in advance based on knowledge related to the production plant as described above, an inappropriate configuration may be typically contained. The comparative example is considered to simulate a sign constraint with an error.

As shown in FIGS. 7A and 7B, the correlation coefficient r was higher in the order of the technique of the present disclosure, the comparative example, LASSO, and no constraint. Furthermore, as shown in FIG. 8, the determination coefficient E is closer to 1 in the order of LASSO, the technique of the present disclosure and the comparative example, and no constraint. As can be seen from FIGS. 7A and 7B, in common LASSO, the accuracy decreases when the parameter $\alpha$ is too large. In other words, in LASSO, $\alpha$ is a so-called hyperparameter, which is to be adjusted by cross-validation. On the other hand, according to the technique of the present disclosure, the accuracy could be improved by taking $\alpha$ sufficiently large. This has an effect of eliminating manual parameter adjustment. Furthermore, in a case where sign constraints were randomly given as in the comparative example, for example, the correlation coefficient r decreased more than the technique according to the embodiment. That is, in the technique according to the embodiment, data to be analyzed has a certain correspondence relationship with variation of the explanatory variable and variation of the target variable, and it can be said that in a case where the sign constraint that matches the correspondence relationship is given, a model that is particularly well fitted can be created. In addition, as can be seen from FIGS. 7A and 7B, even in a case of the comparative example, indicated by the dashed lines, in which the sign constraints are randomly given, the correlation coefficient is higher than in a case without regularization indicated by the dash-dot-dot-dash lines. This indicates that even if an inappropriate sign constraint is imposed for some explanatory variables, it is still possible to create a model that is well fitted. In reality, there is often a case where knowledge related to the correspondence relationship with variation of the explanatory variable and variation of the target variable is not always complete. Even in such a case, according to the technique according to the embodiment, an effect of being able to create a model that is more fitted than in a case without regularization is exhibited.

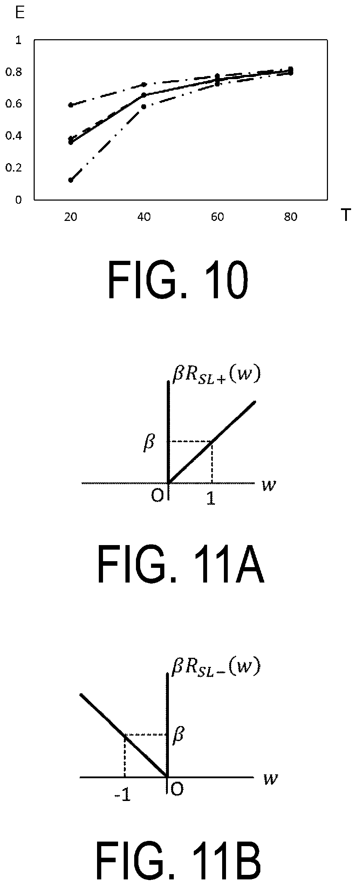

FIG. 9 is a diagram showing a relationship between the number of data T used for learning and the correlation coefficient r for models constructed by a plurality of techniques. FIG. 10 is a diagram illustrating a relationship between the number of data T used for learning and the determination coefficient E for models constructed by a plurality of techniques. As shown in FIG. 9, for example, in a case where the number of data T is 40 or less, the correlation coefficient r has a higher value in the order of the technique of the present disclosure, the comparative example, LASSO, and no constraint. Furthermore, as shown in FIG. 10, the determination coefficient E is closer to 1 in the order of LASSO, the technique of the present disclosure and the comparative example, and no constraint. As described above, it can be said that the technique of the present disclosure is effective when the amount of training data is relatively small. That is, the technique of the present disclosure is effective in a case where data is not sufficiently collected, or in a case where only the latest data is available because the prediction model changes from hour to hour but there is a status change that cannot be observed only from data.

Effect

According to the technique of the present disclosure, it is possible to generate a regression formula that satisfies a constraint having a certain correspondence relationship with a positive or negative direction of variation of an explanatory variable and a positive or negative direction of variation of a target variable. Thus, by using the regression formula, a user can understand, to bring the prediction value $\mu$ close to a desired value, whether a value of the input $x_k$ should be varied positively or negatively. Furthermore, as described with reference to FIGS. 7A and 7B, there is also an advantage of eliminating the adjustment of the parameter $\alpha$ representing the strength of the constraint is unnecessary. In addition, as described with reference to FIGS. 9 and 10, the technique of the present disclosure is particularly effective in a case where there is relatively small amount of training data.

Hereinafter, the effect will be complemented. Here, as to the regularization term of Equation (2), the following can be given.

[Math. 11]

$$\text{Subderivative of} \quad R_+(w) = \begin{cases} 0 & 0 < w \\ 0 & w = 0 \\ -1 & w < 0 \end{cases} \quad \text{is} \quad d = \begin{cases} 0 & 0 < w \\ [-1, 0] & w = 0 \\ -1 & w < 0 \end{cases}$$

$$\text{Subderivative of} \quad R_-(w) = \begin{cases} +1 & 0 < w \\ 0 & w = 0 \\ 0 & w < 0 \end{cases} \quad \text{is} \quad d = \begin{cases} 1 & 0 < w \\ [0, 1] & w = 0 \\ 0 & w < 0 \end{cases}$$

For example, when the constraint sign is positive ($R_+(w)$), the subderivative related to $w_k$ of the cost function $E(w)$ of Equation (2) is obtained by following.

[Math. 12]

$$-\frac{1}{T}\sum_{t=1}^{T} x_k(t)\left(y(t) - \sum_{k'=1}^{K} w_{k'} x_{k'}(t)\right) + \alpha d_k$$

$$= -\frac{1}{T}\sum_{t=1}^{T} x_k(t)y(t) + \frac{1}{T}\sum_{k'=1}^{K} w_{k'} \sum_{t=1}^{T} x_k(t)x_{k'}(t) + \alpha d_k$$

$$= -\frac{1}{T}\sum_{t=1}^{T} x_k(t)y(t) + \frac{1}{T}\sum_{k'=1}^{K} w_k T\delta_{kk'} + \alpha d_k$$

$$= -\frac{1}{T}\sum_{t=1}^{T} x_k(t)y(t) + w_k + \alpha d_k$$

$$= 0$$

Note that here, it is assumed that there is no correlation between a plurality of inputs $x_k$, and that $\delta_{kk'}$ represents a unit matrix.

Then, $w_k$ is obtained by following.

$$w_k = \frac{1}{T}\sum_{t=1}^{T} x_k(t)y(t) - \alpha d_k \begin{cases} = \frac{1}{T}\sum_{t=1}^{T} x_k(t)y(t) & 0 < w_k \\ \in \left[\frac{1}{T}\sum_{t=1}^{T} x_k(t)y(t) + \alpha, \frac{1}{T}\sum_{t=1}^{T} x_k(t)y(t)\right] & w_k = 0 \\ = \frac{1}{T}\sum_{t=1}^{T} x_k(t)y(t) + \alpha & w_k < 0 \end{cases}$$

Furthermore, when this is solved again, it is obtained by following.

$$w_k = \begin{cases} \dfrac{1}{T}\sum_{t=1}^{T} x_k(t)y(t) & 0 < \dfrac{1}{T}\sum_{t=1}^{T} x_k(t)y(t) \\[2mm] 0 & -\alpha < \dfrac{1}{T}\sum_{t-1}^{T} x_k(t)y(t) < 0 \\[2mm] \dfrac{1}{T}\sum_{t=1}^{T} x_k(t)y(t) + \alpha & \dfrac{1}{T}\sum_{t=1}^{T} x_k(t)y(t) < -\alpha \end{cases}$$

Here, if $\alpha$ is sufficiently large, $w_k$ can be represented by Equation (11) below without taking into account a case of the lower stage.
[Math. 15]

$$\text{If } \alpha \to +\infty$$

$$w_k = \begin{cases} \dfrac{1}{T}\sum_{t=1}^{T} x_k(t)y(t) & 0 < \dfrac{1}{T}\sum_{t=1}^{T} x_k(t)y(t) \\[2mm] 0 & \dfrac{1}{T}\sum_{t=1}^{T} x_k(t)y(t) < 0 \end{cases} \qquad \cdots (1 1)$$

In a case of the upper stage of Equation (11), the same solution as the least-squares method is obtained. On the other hand, no sign constraint is imposed in the common least-squares method, and thus, for example, in a case where the number of data T is relatively small, the same solution as the upper stage of Equation (11) may be obtained even in a case corresponding to the lower stage of Equation (11). In this case, it is impossible to determine how to change the value of the explanatory variable to bring the output of the regression formula close to a desired value. On the other hand, in such a case, according to the technology of the present disclosure, the coefficient $w_k$ is made zero, as shown in the lower stage of Equation (11) . That is, the explanatory variable $x_k$ that cannot satisfy the constraint is not used for the regression formula to be created. Thus, it is possible to generate a regression formula that satisfies a constraint having a certain correspondence relationship with a positive or negative direction of variation of the explanatory variable and a positive or negative direction of variation of the target variable. Furthermore, the value of the parameter $\alpha$ can be made a sufficiently large value, and thus it can be said that adjustment is eliminated.
In addition, in common LASSO, for example, $w_k$ is obtained by following.

[Math. 16]

$$\text{When } \dfrac{1}{T}\sum_{t-1}^{T} x_k^{(t)}y_t > \alpha$$

$$w_k = \dfrac{1}{T}\sum_{t=1}^{T} x_k^{(t)}y_t - \alpha$$

That is, estimation is performed by biasing a value to which it should converge to be reduced by $\alpha$. Such a bias acts to increase a square error. On the other hand, according to the technology of the present disclosure, such a bias does not occur, and thus it can be said that the accuracy of the regression formula is improved.
In addition, according to Equation (11), an oracle property (Fan and Li, 2001) is satisfied. That is, when a sample size increases, the probability that the explanatory variable used in the model are correctly selected converges to 1 (conformity of variable selection). Furthermore, an estimator for the explanatory variable has asymptotic normality.

Second Embodiment

In the present embodiment, the sign constraint described above is imposed on the regression coefficient, and performance of making sparse can be improved. The parameter $\beta$ to control the strength of regularization is assumed to be a so-called hyperparameter. That is, in addition to the processing illustrated in FIG. 6, an optimal value of the coefficient is determined by using an existing cross-validation. In the present embodiment, instead of the cost function shown in Equation (2), a cost function shown in Equation (12) below is used. Note that the regression formula is the same as that shown in Equation (1) . [Math. 17]

$$E(\boldsymbol{w}) = \frac{1}{2N}\sum\nolimits_{n=1}^{N}\left[y(n) - \left(\sum\nolimits_{k=1}^{K}w_k x_k\right)\right]^2 + \beta R_{SL}(\boldsymbol{w}) \qquad \cdots (1\,2)$$

where

$$R_{SL}(\boldsymbol{w}) = \sum\nolimits_{k\in\Omega_+} R_{SL+}(w_k) + \sum\nolimits_{k\in\Omega_-} R_{SL-}(w_k)$$

$$R_{SL+}(w) = \begin{cases} w & w \geq 0 \\ +\infty & w < 0 \end{cases}$$

$$R_{SL-}(w) = \begin{cases} +\infty & w \geq 0 \\ -w & w < 0 \end{cases}$$

$\beta$ is a parameter to control the strength of regularization and takes a value of zero or greater. Furthermore, the optimal value of $\beta$ is determined by an existing technique using cross-validation. The regularization term $\beta R_{SL}(w)$ according to the present embodiment also imposes sign constraints on one interval of positive or negative. Specifically, in a case where the constraint sign of $x_k$ is positive in the table of FIG. 1, the value of $R_{SL+}(w)$ is taken, and in a case where the constraint sign is negative, the value of $R_{SL-}(w)$ is taken. That is, the regularization term increases the cost in accordance with the sum of absolute values of coefficients in one of the interval where the coefficient $w_k$ is positive depending on the constraint sign and the interval where the coefficient $w_k$ is negative depending on the constraint sign and makes the cost infinite in the other one of the interval where the coefficient $w_k$ is positive depending on the constraint sign and the interval where the coefficient $w_k$ is negative depending on the constraint sign. In other words, the cost is made infinite in a case where the constraint sign is not matched (i.e., corresponding to a case where $\alpha$ of Equation (2) is made infinite), as well as the cost is increased depending on $\beta$ and w also in a case where the constraint sign is matched.
FIGS. 11A and 11B are schematic diagrams for explaining constraints imposed on the regression coefficient w. In the graph in FIG. 11A, the vertical axis indicates $\beta R_{SL+}(w)$, and the horizontal axis indicates w. In the above-described Equation (12), in a case where the constraint sign associated with the input $x_k$ is positive and the coefficient $w_k$ of the input $x_k$ is zero or greater, $R_{SL+}(w) = w$ is satisfied, and E(w) is also increased in accordance with the increase of w. On the other hand, when the coefficient $w_k$ of the input $x_k$ is less than zero, $R_{SL+}(w) = +\infty$ is satisfied, and the cost is made to diverge to positive infinity. This is made infinite based on the fact that the prediction performance is maximized in a case where $\alpha$ shown in FIG. 2A is a sufficiently large value. That is, the regularization term in the present embodiment makes the cost infinite in an interval where the constraint sign is not matched, and increases the cost depending on the magnitudes of the regression coefficient w and the parameter $\beta$ also in an interval where the constraint sign is matched. Here, when the coefficient $w_k$ is zero or greater, as the input $x_k$ of the regression formula shown in Equation (1) increases, a prediction value $\mu$ by the regression formula also increases. That is, in a case of the constraint sign associated with $x_k$ being positive, the cost function is defined to achieve that the regularization term is decreased when the value of the prediction value $\mu$ also increases as the value of the input $x_k$ increases, and that the regularization term is increased when the value of the prediction value $\mu$ decreases as the value of the input $x_k$ increases.
In the graph in FIG. 11B, the vertical axis indicates $\beta R_{SL-}(w)$, and the horizontal axis indicates w. In the above-described Equation (12), in a case where the constraint sign associated with the input $x_k$ is negative and the coefficient $w_k$ of the input $x_k$ is zero or greater, $R_{SL-}(w) = +\infty$ is satisfied, and the cost is made to diverge to positive infinity. This is made infinite based on the fact that the prediction performance is maximized in a case where $\alpha$ shown in FIG. 2B is a sufficiently large value, and a sufficiently large value is intended. On the other hand, when the coefficient $w_k$ of the input $x_k$ is less than zero, $R_{SL-}(w) = -w$ is satisfied, and E(w) is increased in accordance with the decrease of w. Here, when

the coefficient $w_k$ is less than zero, as the input $x_k$ of the regression formula shown in Equation (1) increases, the prediction value $\mu$ by the regression formula decreases. That is, in a case of the constraint sign associated with $x_k$ being negative, the cost function is defined to achieve that the regularization term is decreased when the value of the prediction value $\mu$ decreases as the value of the input $x_k$ increases and that the regularization term is increased when the value of the prediction value $\mu$ increases as the value of the input $x_k$ increases.

Effect

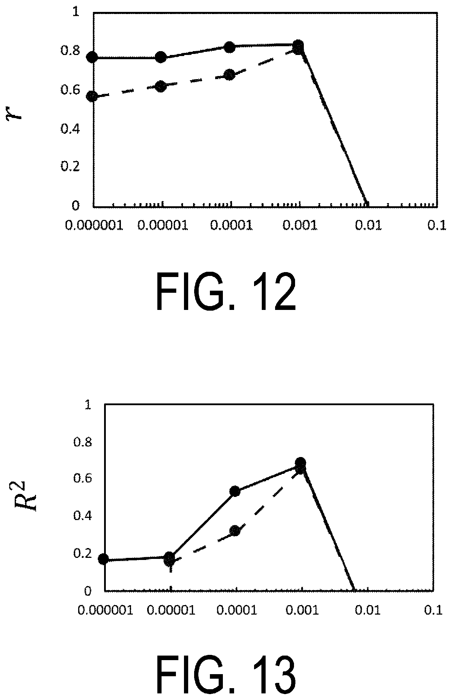

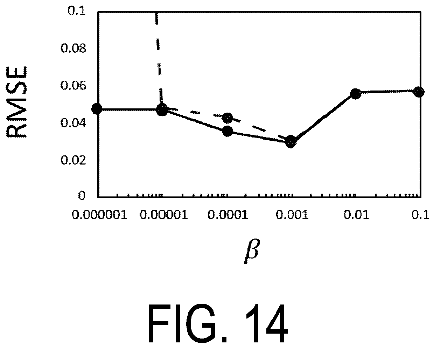

Cross-validation by a leave-one-out method was used to conduct performance evaluation of the technique according to the present embodiment and the existing L1 regularization (LASSO). The number of learning data N was 10, and the number of features K was 11. FIG. 12 is a diagram showing a relationship between the parameter $\beta$ and the correlation coefficient r. In the line graph in FIG. 12, the horizontal axis indicates the parameter $\beta$ and the vertical axis indicates the correlation coefficient r. In addition, the solid line represents a result by the technique according to the present embodiment, and the dashed line represents a result by the existing L1 regularization (LASSO). The correlation coefficient r in the result of the technique according to the present embodiment is higher than that in the result of the existing LASSO particularly in a range where $\beta$ is smaller than 0.001. FIG. 13 is a diagram showing the relationship between the parameter $\beta$ and the determination coefficient $R^2$. In the line graph in FIG. 13, the horizontal axis indicates the parameter $\beta$, and the vertical axis indicates the determination coefficient $R^2$. In addition, the solid line represents a result by the technique according to the present embodiment, and the dashed line represents a result by the existing L1 regularization (LASSO). The determination coefficient $R^2$ in the result of the technique according to the present embodiment is also higher than that in the result of the existing LASSO particularly in a range where $\beta$ is smaller than 0.001. FIG. 14 is a diagram showing the relationship between the parameter $\beta$ and a Root Mean Square Error (RMSE). In the line graph in FIG. 14, the horizontal axis indicates the parameter $\beta$, and the vertical axis indicates the RMSE. In addition, the solid line represents a result by the technique according to the present embodiment, and the dashed line represents a result by the existing L1 regularization (LASSO). The RMSE in the result of the technique according to the present embodiment is also higher than that in the result of the existing LASSO particularly in a range where $\beta$ is smaller than 0.001. In general, in a case where the number of explanatory variables is larger than the number of learning data, the number of equations is smaller than the number of variables to be solved, and thus the regression coefficient cannot be uniquely determined without any regularization. As shown in FIGS. 12 to 14, with regularization by the technique according to the present embodiment, it is possible to determine the regression coefficient even in a case where the number of explanatory variables is larger than the number of learning data, and in addition, it is possible to improve the prediction performance (generalization performance) as compared to the existing LASSO.

Modified Example

Each of the configurations, combinations thereof, and the like in each embodiment are exemplary, and various additions, omissions, substitutions, and other changes may be made as appropriate without departing from the spirit of the present invention. The present disclosure is not limited by the embodiments and is limited only by the claims. Each aspect disclosed in the present description can be combined with any other feature disclosed herein.

The configuration of the computer illustrated in FIG. 5 is an example, and the present disclosure is not limited to such an example. For example, at least a part of the functions of the regression analysis device 1 may be distributed and implemented in a plurality of devices, or a plurality of devices may provide an identical function in parallel. Furthermore, at least a part of the functions of the regression analysis device 1 may be provided on a so-called cloud. Furthermore, the regression analysis device 1 may not include some configurations such as the verification processing unit 144, for example.

In addition, the cost function shown in Equation (2) is assumed to perform the L1 regularization on one of positive or negative interval but also operates by L2 norm or other convex functions. That is, instead of the sum of the absolute values of the coefficients, a term that imposes a square sum of the coefficients or another penalty on one of positive or negative interval may be used.

Furthermore, details of the data to be analyzed by the regression analysis device 1 are not particularly limited. In addition to the prediction of characteristic values such as quality in the manufacturing industry described in the Example, it is applicable to non-manufacturing industry or other various fields.

The present disclosure also includes a method and a computer program for performing the above-described processing, and a computer readable recording medium in which the program is recorded. The recording medium in which the program is recorded enables the above processing by causing the computer to execute the program.

Here, the "computer readable recording medium" refers to a recording medium that accumulates information such as data or programs by electrical, magnetic, optical, mechanical, or chemical action, and from which the computer can read the information. Examples of such a recording medium that can be removed from the computer include a flexible disk, a magneto-optical disk, an optical disk, a magnetic tape, and a memory card. In addition, examples of the recording medium fixed to the computer include an HDD, a Solid State Drive (SSD), and an ROM.

Reference Signs List

1: Regression analysis device
11: Communication I/F
12: Storage device
13: Input and output device
14: Processor
141: Data acquisition unit
142: Coefficient update unit
143: Convergence determination unit
144: Verification processing unit
145: Operation processing unit

**Claims**

1.  A regression analysis device comprising:

    a data acquisition unit configured to read out, from a storage device storing training data used as a target variable and an explanatory variable of a regression model and a constraint condition defining in advance whether the explanatory variable should be varied positively or negatively to vary the target variable in a positive direction or a negative direction, the training data and the constraint condition; and
    a coefficient update unit configured to repeatedly update, using the training data, coefficients of the explanatory variable in the regression model to minimize a cost function including a regularization term that increases a cost in a case where the constraint condition is contravened.

2.  The regression analysis device according to claim 1, wherein
    the regularization term increases the cost in accordance with a sum of absolute values of the coefficients in an interval where the coefficients are positive or negative depending on the constraint condition.

3.  The regression analysis device according to claim 1 or 2, wherein
    the coefficient update unit makes the coefficients zero in a case where the coefficients do not converge to a value satisfying the constraint condition.

4.  The regression analysis device according to any one of claims 1 to 3, wherein
    the coefficient update unit updates the coefficients by a proximal gradient method.

5.  A regression analysis method comprising:

    reading out, by a computer, from a storage device storing training data used as a target variable and an explanatory variable of a regression model and a constraint condition defining in advance whether the explanatory variable should be varied positively or negatively to vary the target variable in a positive direction or a negative direction, the training data and the constraint condition; and
    repeatedly updating, by the computer, using the training data, coefficients of the explanatory variable in the regression model to minimize a cost function including a regularization term that increases a cost in a case where the constraint condition is contravened.

6.  A program causing a computer to perform:

    reading out, from a storage device storing training data used as a target variable and an explanatory variable of a regression model and a constraint condition defining in advance whether the explanatory variable should be varied positively or negatively to vary the target variable in a positive direction or a negative direction, the training data and the constraint condition; and

repeatedly updating, using the training data, coefficients of the explanatory variable in the regression model to minimize a cost function including a regularization term that increases a cost in a case where the constraint condition is contravened.

| DATA NUMBER | INPUT | | | | OUTPUT |
|---|---|---|---|---|---|
| | $x_1$ | $x_2$ | $\cdots$ | $x_K$ | $y$ |
| | POSITIVE | NEGATIVE | | POSITIVE | |
| $t_1$ | $x_1(t_1)$ | $x_2(t_1)$ | $\cdots$ | $x_K(t_1)$ | $y(t_1)$ |
| $\cdots$ | $\cdots$ | $\cdots$ | $\cdots$ | $\cdots$ | $\cdots$ |
| $t_T$ | $x_1(t_T)$ | $x_2(t_T)$ | $\cdots$ | $x_K(t_T)$ | $y(t_T)$ |
| $t_{T+1}$ | $x_1(t_{T+1})$ | $x_2(t_{T+1})$ | $\cdots$ | $x_K(t_{T+1})$ | ? |
| $\cdots$ | $\cdots$ | $\cdots$ | $\cdots$ | $\cdots$ | $\cdots$ |

# FIG. 1

$\alpha$ : STRENGTH OF CONSTRAINT $\qquad$ $\alpha R$

$w$

# FIG. 2A

$\alpha R$

$\alpha$ : STRENGTH OF CONSTRAINT

$w$

# FIG. 2B

$$w_k(s+1) = w_k(s) - \Delta \left. \frac{\partial E(\mathbf{w})}{\partial w_k} \right|_{w_k \to w_k(s)}$$

$$w_k(s) \leftarrow w_k(s+1)$$

# FIG. 3

# FIG. 4

1

REGRESSION ANALYSIS DEVICE

COMMUNICATION I/F — 11

STORAGE DEVICE — 12

INPUT AND OUTPUT DEVICE — 13

PROCESSOR — 14

DATA ACQUISITION UNIT — 141

COEFFICIENT UPDATE UNIT — 142

CONVERGENCE DETERMINATION UNIT — 143

VERIFICATION PROCESSING UNIT — 144

OPERATION PROCESSING UNIT — 145

15

# FIG. 5

START

READ OUT TRAINING DATA AND CONSTRAINT CONDITION — S11

UPDATE EACH COEFFICIENT UNDER SIGN CONSTRAINT — S12

S13

CONVERGE OR ZERO? — NO

YES

STORE REGRESSION FORMULA — S14

VERIFY REGRESSION FORMULA — S20

OPERATION PROCESSING — S30

END

# FIG. 6

FIG. 7A

FIG. 7B

E

FIG. 8

r

FIG. 9

## FIG. 10

## FIG. 11A

## FIG. 11B

FIG. 12

FIG. 13

FIG. 14

## INTERNATIONAL SEARCH REPORT

| | International application No. |
|---|---|
| | PCT/JP2021/004178 |

A. CLASSIFICATION OF SUBJECT MATTER
G06N 99/00(2019.01)i; G06F 17/18(2006.01)i
FI: G06N99/00 180; G06F17/18 Z

According to International Patent Classification (IPC) or to both national classification and IPC

B. FIELDS SEARCHED

Minimum documentation searched (classification system followed by classification symbols)
G06N99/00; G06F17/18

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2018-109805 A (MIZUHO-DL FINANCIAL TECHNOLOGY CO., LTD.) 12 July 2018 (2018-07-12) paragraphs [0001]-[0060] | 1, 4-6 |
| Y | JP 2012-106198 A (TOSHIBA CORP.) 07 June 2012 (2012-06-07) paragraph [0053] | 1, 4-6 |
| Y | JP 2013-59241 A (TOSHIBA CORP.) 28 March 2013 (2013-03-28) paragraph [0072] | 1, 4-6 |
| Y | JP 2019-144779 A (NIPPON TELEGRAPH AND TELEPHONE CORP.) 29 August 2019 (2019-08-29) paragraph [0047] | 4 |

☒ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 April 2021 (05.04.2021) | 20 April 2021 (20.04.2021) |

| Name and mailing address of the ISA/ Japan Patent Office 3-4-3, Kasumigaseki, Chiyoda-ku, Tokyo 100-8915, Japan | Authorized officer Telephone No. |

Form PCT/ISA/210 (second sheet) (January 2015)

**INTERNATIONAL SEARCH REPORT**

International application No.

PCT/JP2021/004178

C (Continuation).   DOCUMENTS CONSIDERED TO BE RELEVANT

| Category* | Citation of document, with indication, where appropriate, of the relevant passages | Relevant to claim No. |
|---|---|---|
| A | 佐藤 豪 等，ReLU 型関数の QUBO 形式に関する数値的検査，電子情報通信学会技術研究報告 vol. 118 no. 470, IEICE Technical Report NC2018-52, 12 April 2019, pp. 49-54, (SATO, Go et al., "Numerical experiments of QUBO formulation for ReLU-type functions") | 1-6 |

**INTERNATIONAL SEARCH REPORT**
Information on patent family members

International application No.

PCT/JP2021/004178

| Patent Documents referred in the Report | Publication Date | Patent Family | Publication Date |
|---|---|---|---|
| JP 2018-109805 A | 12 Jul. 2018 | (Family: none) | |
| JP 2012-106198 A | 07 Jun. 2012 | (Family: none) | |
| JP 2013-59241 A | 28 Mar. 2013 | US 2013/0066791 A1 paragraph [0138] | |
| JP 2019-144779 A | 29 Aug. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROBERT TIBSHIRANI.** Regression Shrinkage and Selection via the Lasso. *Journal of the Royal Statistical Society. Series B (Methodological),* 1996, vol. 58 (1), 267-288